# EUROPÄISCHE PATENTSCHRIFT

(11) **EP 2 098 706 B1**
(45) Veröffentlichungstag und Bekanntmachung des Hinweises auf die Patenterteilung: **13.05.2015**
(21) Anmeldenummer: 09154547.5
(22) Anmeldetag: 06.03.2009
(51) Int. Cl.: F02M 37/00, F02D 19/06, F02D 41/08, F02D 19/08, F02D 41/00, F02D 41/02, F02D 41/38, F02B 3/06

(54) **Dieselmotorische Brennkraftmaschine**
Diesel internal combustion engine
Moteur diesel à combustion interne

(30) Priorität: 07.03.2008 DE 102008013126
(43) Veröffentlichungstag der Anmeldung: 09.09.2009
(73) Patentinhaber: Dotzer, Alois, 90584 Allersberg (DE); Gruber, Georg, 91161 Hilpoltstein (DE); Kaiser, Thomas, 80798 München (DE)
(72) Erfinder: Dotzer, Alois, 90584 Allersberg (DE); Gruber, Georg, 91161 Hilpoltstein (DE); Kaiser, Thomas, 80798 München (DE)
(74) Vertreter: Oberhardt, Knut

(56) Entgegenhaltungen:
- WO-A1-2007/049781
- WO-A1-2008/000462
- WO-A2-2006/005930
- FR-A1- 2 873 752

## Beschreibung

Die Erfindung betrifft eine dieselmotorische Brennkraftmaschine, die mit einem Kraftstoff mit niedrigem Zündpunkt und mit einem Kraftstoff mit höherem Zündpunkt betreibbar ist, nach dem Oberbegriff von Anspruch 1.

Insbesondere bei landwirtschaftlich genutzten Maschinen wird es heute immer interessanter, einen Kraftstoff einzusetzen, den der Landwirt selbst erzeugen kann und dessen Kosten er daher besser kalkulieren kann. Pflanzenöl erfüllt diese Voraussetzungen. Ölpflanzen, die einen hohen Ölertrag garantieren, können praktisch in jeder Klimazone angebaut werden. Die Pressung kann in kleinen dezentralen Anlagen vorgenommen werden, die entweder von dem Landwirt selbst oder von einer landwirtschaftliche Vereinigung - wie beispielsweise einem Maschinenring - unterhalten werden. Da sich zwischenzeitlich ein Netz von Tankstellen etabliert hat, an denen dieser alternative Kraftstoff angeboten wird, ist er auch für den Betrieb von Lastkraftwagen interessant geworden. Um in diesem Bereich eine absolute Unabhängigkeit von der vorherrschenden Außentemperatur zu erreichen, werden hauptsächlich so genannte Zwei-Tank-Systeme eingesetzt, bei denen mit Dieselkraftstoff gestartet wird und, erst wenn der Motor seine normale Betriebstemperatur erreicht hat, auf Pflanzenöl umgeschaltet wird.

Diese Möglichkeit zum Wechsel zwischen Dieselkraftstoff und Pflanzenöl wird als notwendig erachtet, weil sich Pflanzenöl anders verhält als Dieselkraftstoff. Während Dieselkraftstoff über einen großen Temperaturbereich seine Viskosität kaum ändert, wird Pflanzenöl mit sinkender Temperatur - abhängig von der Ölsorte - immer zähflüssiger. Es sind folglich nicht nur die Viskositäts-Temperatur-Kennlinien von Pflanzenöl und Dieselkraftstoff unterschiedlich, sondern es unterscheiden sich diesbezüglich auch die einzelnen Pflanzenölsorten untereinander ganz erheblich. Diese unterschiedlichen Eigenschaften müssen bei dem Kraftstoffkreislauf berücksichtigt werden.

Ebenso besteht bei Dieselkraftstoff und Pflanzenöl ein großer Unterschied im Zündpunkt. Unter Zündpunkt oder Zündtemperatur versteht man diejenige Temperatur, auf die man eine brennbare Substanz oder eine Kontaktoberfläche erhitzen muss, damit sie sich in Gegenwart von Luftsauerstoff ohne Zündquelle, ausschließlich aufgrund ihrer Erhitzung, selbst entzündet. Sie ist von unterschiedlichen Bedingungen, unter anderem vom Druck, abhängig. Der Zündpunkt von Dieselkraftstoff liegt unter den in einem modernen Dieselmotor vorherrschenden Bedingungen bei ca. 220°C, während der Zündpunkt von Pflanzenöl unter gleichen Bedingungen bei ca. 300°C liegt.

Der unterschiedliche Zündpunkt der beiden Kraftstoffe führt zu einem unterschiedlichen Ablauf der Verbrennung, wobei die genauen Unterschiede noch weitgehend ungeklärt sind. Es wurde jedoch erkannt, dass ein moderner Dieselmotor wesentlich leichter mit einem Kraftstoff mit niedrigem Zündpunkt, also beispielsweise Dieselkraftstoff, gestartet werden kann. Es wurde auch bereits erkannt, dass so ein Motor in einem unteren Lastbereich, also z. B. beim Betrieb mit Leerlaufdrehzahl, ebenfalls besser mit Dieselkraftstoff zu betreiben ist. Im oberen Lastbereich kann dagegen auf Dieselkraftstoff verzichtet und der Motor mit reinem Pflanzenöl betrieben werden.

Auf dieser Erkenntnis wurden bereits eine Vielzahl von Kraftstoffzuführungen entwickelt. Die Basis dieser Kraftstoffzuführungen wird oft durch das bereits oben erwähnte Zwei-Tank-System gebildet. Dabei sind ein kleiner Tank für Dieselkraftstoff und ein großer Tank für Pflanzenöl vorgesehen. Für den Startvorgang wird ausschließlich Kraftstoff aus dem Dieseltank entnommen. Sobald der Motor seine Betriebstemperatur erreicht hat und zumindest in einem mittleren Lastbereich betrieben wird, wird die Kraftstoffversorgung auf Pflanzenöl umgeschaltet. Eine solche Kraftstoffzuführung durch ein Zwei-Tank-System ist zum Beispiel aus dem Dokument WO2006/005930 A2 bekannt.

Wird der Motor dann wieder im Leerlauf betrieben, sinkt auch seine Betriebstemperatur wieder ab. Hieraus ergibt sich eine aufwändige Regelung, da bei einer kurzen Betriebszeit im Leerlauf keine Notwendigkeit besteht, auf Dieselbetrieb umzuschalten. Läuft der Motor dagegen für längere Zeit in einem unteren Lastbereich, so muss von Pflanzenöl- auf Dieselbetrieb umgeschaltet werden. Die Regelung bedarf daher einer Zeiterfassung, verschiedener Temperatursensoren und einer komplexen Steuersoftware, die alle Parameter verarbeitet und in entsprechende Steuerbefehle umsetzt. Insbesondere bei nachträglichen Umrüstungen ist hiermit meist ein bedeutender Eingriff in die vom Hersteller original vorgesehene Steuerung für reinen Dieselbetrieb verbunden. Das führt oftmals zu Problemen und nicht vorhersehbaren Fehlern.

Der Erfindung liegt die Aufgabe zugrunde, eine dieselmotorische Brennkraftmaschine mit einem Zwei-Tank-System für die Kraftstoffzufuhr so auszugestalten, dass ohne aufwändige Regelung ein problemloser Betrieb der Brennkraftmaschine unter allen Betriebszuständen gewährleistet ist. Weiterhin soll die Steuerung der Kraftstoffzuführung einfach und kostengünstig ausgeführt sein.

Gelöst wird die Aufgabe gemäß der Erfindung durch eine dieselmotorische Brennkraftmaschine mit den Merkmalen von Anspruch 1. Erfindungsgemäß ist die Zuführung des Kraftstoffes mit niedrigem Zündpunkt so geregelt, dass die Einspritzanlage im Leerlaufbetrieb ausschließlich mit dem Kraftstoff mit niedrigem Zündpunkt beschickt wird, dass im unteren Lastbereich die Menge des Kraftstoffes mit niedrigem Zündpunkt unverändert bei der Leerlaufmenge verbleibt und dass im höheren Lastbereich kein Kraftstoff mit niedrigem Zündpunkt zugeführt wird. Durch die Zugabe der konstanten Leerlaufmenge an Kraftstoff mit niedrigem Zündpunkt, beispielsweise Dieselkraftstoff, über einen größeren Lastbereich, ist das Mischungsverhältnis zwischen Dieselkraftstoff und Kraftstoff mit höherem Zündpunkt, beispielsweise Pflanzenöl, innerhalb dieses Lastbereichs direkt von der dem Motor abgeforderten Leistung abhängig. Das bedeutet, dass bei mehr Leistung, wenn der Verbrauch steigt, Kraftstoff mit einem hohen Anteil Pflanzenöl und einem geringen Anteil Dieselkraftstoff zugeführt wird. Wird der Motor dagegen mit wenig Leistung betrieben, sinkt auch der Verbrauch und damit der Anteil an Pflanzenöl. Auf diese Weise kann auf eine Regelung des Dieselkraftstoffs vollkommen verzichtet werden, da sich das Verhältnis zwischen Pflanzenöl und Dieselkraftstoff automatisch auf die Betriebsbedingungen des Motors einstellt.

Die Menge an zugeführtem Kraftstoff mit niedrigem Zündpunkt ist so bemessen, dass sie für den Leerlaufbetrieb ausreichend ist. Da bei den meisten Abstellmanövern eine Brennkraftmaschine vor dem Abstellvorgang eher im niedrigen Lastbereich oder sogar im Leerlauf betrieben wird, kann sich das Einspritzsystem mit reinem Dieselkraftstoff füllen und die Brennkraftmaschine kann folglich auch mit reinem Dieselkraftstoff gestartet werden. Der Beginn des höheren Lastbereichs hängt von der Betriebsart der Brennkraftmaschine ab. Beispielsweise bei einem LKW, bei dem die volle Leistung nur bei voller Beladung bei einer Steigung abgefordert wird, kann davon ausgegangen werden, dass der höhere Lastbereich bereits bei ca. 35% der Volllast beginnt. Bei einem Traktor beginnt der höhere Lastbereich dagegen oft erst bei ca. 50% der Vollast, da er so ausgelegt ist, dass er lange Zeit unter Vollast betrieben werden kann. Im diesem höheren Lastbereich wird die Zufuhr an Dieselkraftstoff gestoppt. Hier kann es nicht vorkommen, dass die Brennkraftmaschine so weit abkühlt, dass der Betrieb mit reinem Pflanzenöl nicht möglich ist oder Schäden an der Brennkraftmaschine hervorrufen könnte. Sinkt die Leistung in niedrigere Bereiche ab, wird wieder die konstante Leerlaufmenge des Dieselkraftstoffs zugeführt.

Eine aufwendige, von der Leistung abhängige Regelung der der Brennkraftmaschine zugeführten Menge an Dieselkraftstoff kann auf diese Weise vollkommen entfallen. Die Zuführung der immer konstanten Leerlaufmenge muss nur zu- oder abgeschaltet werden.

Da die mögliche Fördermenge eines Kraftstoffs mit niedrigem Zündpunkt von unterschiedlichen Bedingungen abhängt, ist ohne spezielle Regelung nur eine annähernd konstante Zufuhr möglich. Die eingestellte Menge sollte jedoch innerhalb eines Toleranzbereichs von +/- 20% liegen.

Aufgrund neuer Abgasvorschriften werden moderne dieselmotorische Brennkraftmaschinen häufig mit einem Partikelfilter ausgerüstet. Die ausgefilterten Partikel müssen von Zeit zu Zeit abgebrannt werden da ansonsten der Widerstand im Abgasweg immer höher werden würde. Vorteilhaft wird für so eine Abbrandphase die Leerlaufmenge wenigstens verdoppelt. Auf diese Weise ist gewährleistet, dass die für den Abbrand erforderliche Temperatur erreicht wird und bei dieser Temperatur keine schädlichen Ablagerungen entstehen.

Die Erfindung wird vorteilhaft auch bei älteren Motoren mit Niederdruckeinspritzung angewandt. Die meisten Vorteile gegenüber einer herkömmlichen Brennkraftmaschine ergeben sich jedoch, wenn die Erfindung bei einem modernen Motor mit Hochdruckeinspritzung verwendet wird. Diese Motoren weisen üblicherweise eine Kraftstoffförderpumpe, eine Hochdruckpumpe und eine elektronische Steuerung auf.

In vorteilhafter Weise ist vor der Kraftstoffförderpumpe eine Zusammenführung einer Leitung von dem Tank für den Kraftstoff mit dem niedrigen Zündpunkt und einer Leitung von dem Tank für den Kraftstoff mit dem höheren Zündpunkt vorgesehen. Über diese Zusammenführung findet die Vermischung der beiden unterschiedlichen Kraftstoffe statt. Da sich die Zusammenführung vor der Kraftstoffförderpumpe befindet und der Kraftstoff mit niedrigem Zündpunkt in konstanter Menge dieser Zusammenführung zugeführt wird, deckt die Kraftstoffförderpumpe den restlichen, von der momentan abverlangten Leistung abhängigen Kraftstoffbedarf aus dem Tank für den Kraftstoff mit dem höheren Zündpunkt.

Um die Zuführung einer konstanten Menge des Kraftstoffs mit dem niedrigen Zündpunkt gewährleisten zu können, ist zwischen dem Tank für den Kraftstoff mit dem niedrigen Zündpunkt und der Zusammenführung eine Kraftstoffpumpe vorgesehen. Diese Pumpe wird vorteilhaft so angesteuert, dass sie immer die gleiche Menge Kraftstoff fördert. Bei Brennkraftmaschinen mit Partikelfilter sollte sie jedoch so ausgelegt sein, dass sie wenigstens auch die doppelte Menge der konstanten Leerlaufmenge zu fördern im Stande ist.

Es könnte beispielsweise eine geregelte Pumpe oder eine so genannte Dosierpumpe eingesetzt werden. Diese Pumpen sind jedoch relativ teuer.Es kann aber auf solche komplexen Pumpen verzichtet und eine kostengünstige Pumpe verwendet werden, wenn der Durchfluss des Kraftstoffes auf andere Weise konstant gehalten wird. Erfindungsgemäß ist deshalb zwischen der Kraftstoffpumpe und der Zusammenführung eine Drossel vorgesehen. Die Kraftstoffpumpe wird dann so betrieben, dass an der Drossel immer ein geringer Überdruck ansteht. Der Durchfluss des Kraftstoffs durch die Drossel ist auf diese Weise auch mit einer kostengünstigen Pumpe annähernd konstant. Bei Brennkraftmaschinen mit Partikelfilter könnte ein Bypass um die Drossel herumführen, in dem ein Magnetventil und eine weitere Drossel angeordnet sind. Der Durchmesser der weiteren Drossel sollte wenigstens so groß wie der Durchmesser der ersten Drossel sein. Für die Abbrandphase wird dann nur das Magnetventil geöffnet, so dass sich der Durchfluss durch die nun parallel geschalteten Drosseln wenigstens verdoppelt.

Zwischen der Kraftstoffförderpumpe und der Hochdruckpumpe ist ein Kraftstofffilter vorgesehen. Dieses Kraftstofffilter verhindert, dass Schmutzpartikel in die äußerst empfindliche Hochdruckpumpe gelangen.

Zwischen dem Kraftstofffilter und der Hochdruckpumpe ist vorteilhaft ein Überdruckventil mit einer Rückführung vorgesehen, wobei die Rückführung vor der Kraftstoffförderpumpe mündet. Mit dieser Maßnahme wird erreicht, dass - unabhängig von der Viskosität des Kraftstoffes oder des Kraftstoffgemisches - an der Hochdruckpumpe in etwa immer der gleiche Vordruck ansteht.

Da die Kraftstoffförderpumpe, zumindest bei höheren Drehzahlen, mehr Kraftstoff fördert als von der Hochdruckpumpe benötigt wird, ist eine Rücklaufleitung in den Tank für den Kraftstoff mit dem höheren Zündpunkt vorgesehen, die vor der Hochdruckpumpe abzweigt. Diese Rücklaufleitung wird verwendet, wenn die Brennkraftmaschine mit höherer Leistung betrieben wird. In diesem Fall wird durch die Kraftstoffförderpumpe hauptsächlich der Kraftstoff mit dem höheren Zündpunkt der Hochdruckpumpe zugeführt.

Bei der Verwendung von Pflanzenöl soll der Rücklauf in den Tank von der Viskosität des Pflanzenöls abhängig gemacht werden. Zu diesem Zweck ist in der Rücklaufleitung eine Drossel vorgesehen. Bei kaltem Pflanzenöl fließt durch die Drossel nur wenig Kraftstoff zurück in den Tank und es steht an der Hochdruckpumpe ein höherer Vordruck an. Bei warmem Pflanzenöl lässt die Drossel dagegen mehr Pflanzenöl zurück in den Tank fließen, da die Hochdruckpumpe in diesem Fall mit geringerem Vordruck auskommt.

Erfindungsgemäß ist in der Rücklaufleitung eine Verschlusseinrichtung vorgesehen, die mit der elektronischen Steuerung in Verbindung steht. Mit dieser Verschlusseinrichtung kann der Rücklauf von Kraftstoff in den Tank vollkommen unterbunden werden, wenn die Brennkraftmaschine mit niedriger Leistung, z. B. im Leerlauf, betrieben wird. In diesem Lastbereich wird der Einspritzanlage hauptsächlich Kraftstoff mit niedrigem Zündpunkt zugeführt. Ein Rücklauf in den Tank ist in diesem Lastbereich nicht notwendig. Weiterhin wird mit der Verschlusseinrichtung verhindert, dass eine große Menge Kraftstoff mit niedrigem Zündpunkt in den Tank für den Kraftstoff mit hohem Zündpunkt rückgeführt wird.

Im höheren Lastbereich unterbindet die elektronische Steuerung die Zufuhr von Kraftstoff mit niedrigem Zündpunkt zur Einspritzanlage. Dies hat zur Folge, dass die Brennkraftmaschine im höheren Lastbereich ausschließlich mit dem Kraftstoff mit dem höheren Zündpunkt betrieben wird. Vorteilhaft ist zu diesem Zweck zwischen dem Tank für den Kraftstoff mit niedrigem Zündpunkt und der Zusammenführung ein Magnetventil vorgesehen. Dieses Magnetventil wird im höheren Lastbereich von der Steuerung geschlossen. Sobald die Brennkraftmaschine nicht mehr in dem höheren Lastbereich betrieben wird, wird das Magnetventil wieder geöffnet, so dass wieder die konstante Leerlaufmenge an Kraftstoff mit niedrigem Zündpunkt zugeführt werden kann.

Die Erfindung hat sich besonders bewährt, wenn die Einspritzanlage in Common-Rail-Technik aufgebaut ist.

Weitere Einzelheiten und Vorteile der Erfindung ergeben sich aus den Unteransprüchen im Zusammenhang mit der Beschreibung eines Ausführungsbeispiels, das anhand der Zeichnung eingehend erläutert wird.

Es zeigt:

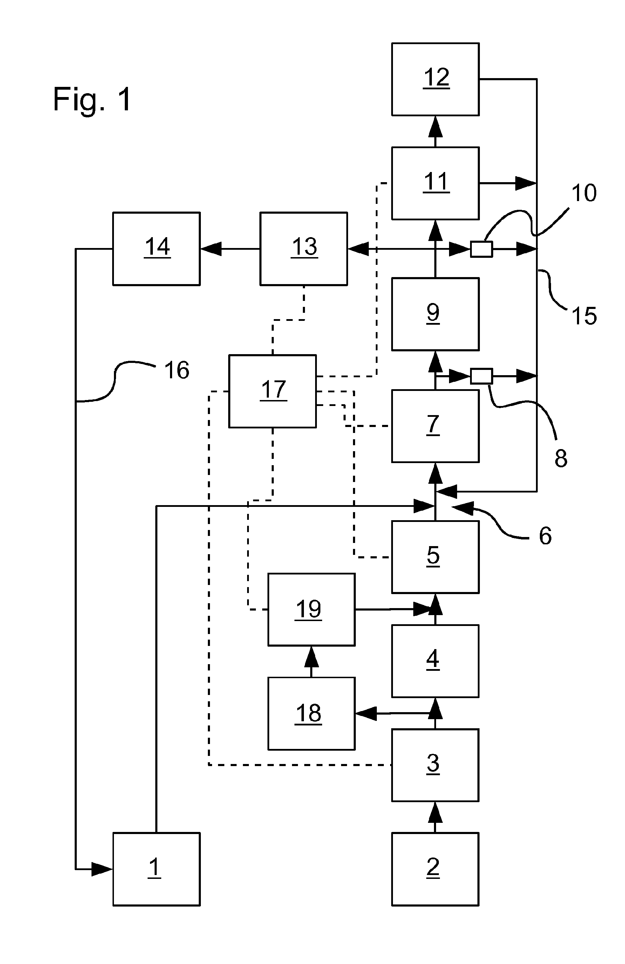

- Fig. 1: ein Blockschaltbild des Kraftstoffkreislaufs einer erfindungsgemäßen dieselmotorischen Brennkraftmaschine.

Bei dem gezeigten Kraftstoffkreislauf handelt es sich um ein so genanntes Zwei-Tank-System. Es ist ein großer Pflanzenöltank 1 und ein kleiner Dieseltank 2 vorgesehen. Beide Kraftstoffe werden bei der Kraftstoffzusammenführung 6 miteinander vermischt. Zwischen dem Dieseltank 2 und der Kraftstoffzusammenführung 6 sind noch eine Dieselpumpe 3, eine erste Drossel 4 und ein erstes Magnetventil 5 angeordnet. Weiterhin ist neben der Drossel 4 noch ein Bypass mit der dritten Drossel 18 und dem dritten Magnetventil 19 angeordnet. Der Durchmesser der dritten Drossel 18 ist wenigstens genauso groß bemessen wie der Durchmesser der ersten Drossel 4.

Der Kraftstoff wird über die Kraftstoffförderpumpe 7 und den Filter 9 der Hochdruckpumpe 11 zur Verfügung gestellt. Dort wird der Kraftstoff auf über 1.000 bar verdichtet und gelangt so in die Einspritzanlage 12. Diese Einspritzanlage 12 kann in Common-Rail-Technik aufgebaut sein, so dass der hoch verdichtete Kraftstoff zuerst einem hier nicht dargestellten Druckspeicher zugeführt wird. Aus diesem Druckspeicher wird der Kraftstoff über die ebenfalls nicht extra dargestellten Einspritzdüsen bei Bedarf in den Brennraum eingespritzt.

Zwischen dem Kraftstofffilter 9 und der Hochdruckpumpe 11 zweigt eine Rücklaufleitung 16 in den Pflanzenöltank 1 ab, mit der nur reines Pflanzenöl in den Pflanzenöltank 1 zurückgeleitet werden soll. In der Rücklaufleitung 16 sind ein zweites Magnetventil 13 und eine zweite Drossel 14 vorgesehen.

Eine Kraftstoffrückführung 15 mündet zwischen dem ersten Magnetventil 5 und der Kraftstoffförderpumpe 7. Über diese Leitung rückgeführter Kraftstoff wird der Kraftstoffförderpumpe 7 sofort wieder zur Verfügung gestellt. In die Kraftstoffrückführung 15 wird Leckage-Kraftstoff aus der Einspritzanlage 12 und aus der Hochdruckpumpe 11 eingeleitet. Weiterhin wird die Kraftstoffrückführung 15 über ein erstes Überdruckventil 8 und ein zweites Überdruckventil 10 beschickt.

Es ist eine elektronische Steuerung 17 vorgesehen, die über Leitungen, die in der Zeichnung als gestrichelte Linien dargestellt sind, mit einigen der gezeigten Bauteile verbunden ist.

Bei einem Start der Brennkraftmaschine wird auch die Dieselpumpe 3 in Betrieb gesetzt. Die Fördermenge der Dieselpumpe 3 ist so bemessen, dass an der ersten Drossel 4 und der dazu parallel geschalteten dritten Drossel 18 immer ein geringer Überdruck ansteht. Dieselpumpe 3 und erste Drossel 4 sind weiterhin so abgestimmt, dass die aus dem Dieseltank 2 geförderte Menge an Dieselkraftstoff bei geschlossenem dritten Magnetventil 19 für den Betrieb der Brennkraftmaschine mit Leerlaufdrehzahl ausreichend ist. Die Einspritzanlage 12 erhält auf diese Weise reinen Dieselkraftstoff. In diesem Betriebszustand ist auch das zweite Magnetventil 13 geschlossen, so dass kein Rückfluss über die zweite Drossel 14 und die Rücklaufleitung 16 in den Pflanzenöltank 1 stattfinden kann.

Sobald der Brennkraftmaschine eine höhere Leistung abverlangt wird, fördert die Kraftstoffförderpumpe 7 ein größeres Kraftstoffvolumen. Da durch die erste Drossel 4 jedoch kontinuierlich nur die konstante Leerlaufmenge zur Verfügung steht, entsteht in dem System vor der Kraftstoffförderpumpe 7 ein Unterdruck. Dadurch wird aus dem Pflanzenöltank 1 Pflanzenöl angesaugt und an der Kraftstoffzusammenführung 6 mit dem Dieselkraftstoff vermischt. Diese Kraftstoffmischung wird über den Filter 9 zur Hochdruckpumpe 11 geführt und von dort mit hohem Druck an die Einspritzanlage 12 weitergeleitet.

Umso mehr die Leistung erhöht wird, desto größer wird das von der Kraftstoffförderpumpe 7 geförderte Kraftstoffvolumen. Da die Menge an Dieselkraftstoff immer konstant bleibt, erhöht sich folglich mit der Leistung auch der Anteil an Pflanzenöl. Das Mischungsverhältnis zwischen Dieselkraftstoff und Pflanzenöl wird folglich vollkommen automatisch an die abgeforderte Leistung angepasst.

Im höheren Lastbereich kann die Brennkraftmaschine mit reinem Pflanzenöl betrieben werden. Über die elektronische Steuerung 17 wird nun das erste Magnetventil 5 geschlossen. Gleichzeitig wird die Dieselpumpe 3 außer Betrieb gesetzt. Dies kann entweder über die elektronische Steuerung 17 erfolgen, oder aber es ist zwischen Dieselpumpe 3 und erstem Magnetventil 5 ein Druckschalter eingebaut, der die Dieselpumpe 3 bei einem voreingestellten Druck abschaltet.

Das zweite Überdruckventil 10 ist vorgesehen, um zu gewährleisten, dass an der Hochdruckpumpe 11 in etwa immer der gleiche Vordruck ansteht. Bei zu hohem Vordruck öffnet das zweite Überdruckventil 10, so dass der zu viel geförderte Kraftstoff über die Rückführung 15 wieder der Ansaugseite der Kraftstoffförderpumpe 7 zugeführt wird. In ähnlicher Weise wirkt das erste Überdruckventil 8. Hier soll verhindert werden, dass sich vor dem Filter 9 ein Druck aufbauen kann, der den Filter zerstören könnte. Auch hier wird der überschüssige Kraftstoff durch das erste Überdruckventil 8 und die Rückführung 15 wieder der Saugseite der Kraftstoffförderpumpe 7 zugeführt.

Insbesondere im höheren Lastbereich würde sich der Kraftstoff in dem Kreislauf über die Kraftstoffförderpumpe 7, den Filter 9, die Hochdruckpumpe 11, die Einspritzanlage 12 und die Rückführung 15 zu stark erhitzen, so dass es zur Blasenbildung im Kraftstoff kommen könnte. Über die Steuerung 17 wird deshalb im höheren Lastbereich das zweite Magnetventil 13 geöffnet. Hierdurch bildet sich für den Kraftstoff ein Kühlkreislauf über den Pflanzenöltank 1 aus. Dieser Kühlkreislauf wird durch die zweite Drossel 14 geregelt. Steht an der zweiten Drossel 14 kaltes zähflüssiges Pflanzenöl an, so wird nur eine geringe Menge durch die zweite Drossel 14 passieren. Es steht folglich an der Hochdruckpumpe 11 ein höherer Druck an, der eine komplette Füllung der Hochdruckpumpe 11 gewährleistet. Überschüssiges Pflanzenöl wird über die Rückführung 15 in kleinem Kreislauf geführt und heizt sich somit relativ schnell auf. Sobald das Pflanzenöl erwärmt ist, erhöht sich aufgrund der geringeren Zähigkeit auch die Durchflussrate durch die zweite Drossel 14, so dass mehr Pflanzenöl über den Kühlkreislauf durch die Rücklaufleitung 16 und den Pflanzenöltank 1 geführt wird.

Da das zweite Magnetventil 13 nur im höheren Lastbereich geöffnet ist, ist sichergestellt, dass ausschließlich reines Pflanzenöl in den Pflanzenöltank 1 rückgeführt wird. Wird die Brennkraftmaschine danach wieder in einem unteren Lastbereich betrieben, wird über die elektronische Steuerung 17 das zweite Magnetventil 13 wieder geschlossen. Gleichzeitig wird das erste Magnetventil 5 wieder geöffnet, so dass wieder eine konstante Menge Dieselkraftstoff zugeführt werden kann.

Die Regelung der Kraftstoffzusammensetzung in dem unteren Lastbereich erfolgt automatisch. Sinkt die Leistung ab, wird ebenfalls die Fördermenge der Kraftstoffförderpumpe 7 verringert. Damit verringert sich auch die angesaugte Menge Pflanzenöl aus dem Pflanzenöltank 1. Bei Erreichen der Leerlaufdrehzahl ist wiederum die aus dem Dieseltank 2 geförderte Menge an Dieselkraftstoff für den Betrieb ausreichend. Da in diesem Betriebszustand der Dieselkraftstoff mit geringem Überdruck an der Kraftstoffförderpumpe 7 ansteht, kann in der Leitung zwischen Pflanzenöltank 1 und der Kraftstoffzusammenführung 6 ein Rückschlagventil eingebaut sein. Dieses in der Zeichnung nicht dargestellte Rückschlagventil verhindert, dass Dieselkraftstoff in den Pflanzenöltank 1 gelangt.

Soll in einem hier nicht dargestellten Partikelfilter eine Abbrandphase eingeleitet werden, wird das dritte Magnetventil 19 über die elektronische Steuerung 17 geöffnet. Die dritte Drossel 18 besitzt eine Drosselbohrung, deren Durchmesser wenigstens so groß wie der Durchmesser der Drosselbohrung der ersten Drossel 4 ist. Da die Dieselpumpe 3 so ausgelegt ist, dass auch bei geöffnetem ersten 5 und dritten Magnetventil 19 sowohl an der ersten Drossel 4 als auch an der dritten Drossel 18 ein Überdruck ansteht, steht der Einspritzanlage 12 nun wenigstens die doppelte Menge an Dieselkraftstoff zur Verfügung. Mit dieser Menge lässt sich nun ein sicherer Abbrand der ausgefilterten Partikel durchführen.

### Bezugszeichenliste:

- 1: Pflanzenöltank
- 2: Dieseltank
- 3: Dieselpumpe
- 4: erste Drossel
- 5: erstes Magnetventil
- 6: Kraftstoffzusammenführung
- 7: Kraftstoffförderpumpe
- 8: erstes Überdruckventil
- 9: Kraftstofffilter
- 10: zweites Überdruckventil
- 11: Hochdruckpumpe
- 12: Einspritzanlage
- 13: zweites Magnetventil
- 14: zweite Drossel
- 15: Rückführung
- 16: Rücklaufleitung
- 17: elektronische Steuerung
- 18: dritte Drossel
- 19: drittes Magnetventil

## Patentansprüche

1. Dieselmotorische Brennkraftmaschine, die mit einem Kraftstoff mit niedrigem Zündpunkt und mit einem Kraftstoff mit höherem Zündpunkt betreibbar ist, mit einem Tank (2) für den Kraftstoff mit niedrigem Zündpunkt, mit einem Tank (1) für den Kraftstoff mit höherem Zündpunkt und mit einer Einspritzanlage (12), **dadurch gekennzeichnet, dass** die Zuführung des Kraftstoffes mit niedrigem Zündpunkt so geregelt ist, dass die Einspritzanlage (12) im Leerlaufbetrieb ausschließlich mit dem Kraftstoff mit niedrigem Zündpunkt beschickt wird, dass im unteren Lastbereich die Menge des Kraftstoffes mit niedrigem Zündpunkt unverändert bei der Leerlaufmenge verbleibt und dass im höheren Lastbereich kein Kraftstoff mit niedrigem Zündpunkt zugeführt wird.

2. Dieselmotorische Brennkraftmaschine nach Anspruch 1, **dadurch gekennzeichnet, dass** die Leerlaufmenge in einem Toleranzbereich von +/- 20% gleich gehalten wird.

3. Dieselmotorische Brennkraftmaschine nach Anspruch 2, **dadurch gekennzeichnet, dass** ein Partikelfilter vorgesehen ist und für eine Abbrandphase die Leerlaufmenge um wenigstens 100% erhöht wird.

4. Dieselmotorische Brennkraftmaschine nach Anspruch 2, **dadurch gekennzeichnet, dass** eine Kraftstoffförderpumpe (7), eine Hochdruckpumpe (11) und eine elektronische Steuerung (17) vorgesehen sind.

5. Dieselmotorische Brennkraftmaschine nach Anspruch 4, **dadurch gekennzeichnet, dass** vor der Kraftstoffförderpumpe (7) eine Zusammenführung (6) einer Leitung von dem Tank (2) für den Kraftstoff mit dem niedrigen Zündpunkt und einer Leitung von dem Tank (1) für den Kraftstoff mit dem höheren Zündpunkt vorgesehen ist.

6. Dieselmotorische Brennkraftmaschine nach Anspruch 5, **dadurch gekennzeichnet, dass** zwischen dem Tank (2) für den Kraftstoff mit dem niedrigen Zündpunkt und der Zusammenführung (6) eine Kraftstoffpumpe (3) vorgesehen ist.

7. Dieselmotorische Brennkraftmaschine nach Anspruch 6, **dadurch gekennzeichnet, dass** zwischen der Kraftstoffpumpe (3) und der Zusammenführung (6) eine erste Drossel (4) vorgesehen ist.

8. Dieselmotorische Brennkraftmaschine nach Anspruch 4, **dadurch gekennzeichnet, dass** zwischen Kraftstoffförderpumpe (7) und Hochdruckpumpe (11) ein Kraftstofffilter (9) vorgesehen ist.

9. Dieselmotorische Brennkraftmaschine nach Anspruch 8, **dadurch gekennzeichnet, dass** zwischen dem Kraftstofffilter (9) und der Hochdruckpumpe (11) ein Überdruckventil (10) mit einer Rückführung (15) vorgesehen ist, die vor der Kraftstoffförderpumpe (7) endet.

10. Dieselmotorische Brennkraftmaschine nach Anspruch 9, **dadurch gekennzeichnet, dass** eine Rücklaufleitung (16) in den Tank (1) für den Kraftstoff mit dem höheren Zündpunkt vor der Hochdruckpumpe (11) abzweigt.

11. Dieselmotorische Brennkraftmaschine nach Anspruch 10, **dadurch gekennzeichnet, dass** in der Rücklaufleitung (16) eine zusätzliche Drossel (14) vorgesehen ist.

12. Dieselmotorische Brennkraftmaschine nach Anspruch 11, **dadurch gekennzeichnet, dass** in der Rücklaufleitung (16) eine Verschlusseinrichtung (13) vorgesehen ist, die mit der elektronischen Steuerung (17) in Verbindung steht.

13. Dieselmotorische Brennkraftmaschine nach Anspruch 12, **dadurch gekennzeichnet, dass** die Verschlusseinrichtung (13) geschlossen ist, wenn der Einspritzanlage (12) Kraftstoff mit niedrigem Zündpunkt zugeführt wird.

14. Dieselmotorische Brennkraftmaschine nach Anspruch 1, **dadurch gekennzeichnet, dass** zwischen dem Tank (2) für den Kraftstoff mit niedrigem Zündpunkt und der Zusammenführung (6) ein Magnetventil (5) vorgesehen ist.

15. Dieselmotorische Brennkraftmaschine nach Anspruch 3, **dadurch gekennzeichnet, dass** die Einspritzanlage (12) in Common-Rail-Technik aufgebaut ist.

## Claims

1. compression-ignition internal combustion engine operable with a fuel having a low ignition point and with a fuel having a higher ignition point, comprising a tank (2) for fuel having a low ignition point, a tank (1) for the fuel having the higher ignition point and an injection system (12), **characterized in that** the supply of the fuel having the low ignition point is regulated in such a manner that, in idling operation, the injection system (12) is exclusively supplied with fuel having the low ignition point, in the lower load range, the amount of fuel having the low ignition point remains unchanged at the idling amount and, in the higher load range, no fuel having the low ignition point is supplied.

2. The compression-ignition internal combustion engine according to claim 1, **characterized in that** the idling amount is maintained within a tolerance range of +/- 20%.

3. The compression-ignition internal combustion engine according to claim 2, **characterized in that** a particulate filter is provided and the idling amount is increased by at least 100% for a burn-off phase.

4. The compression-ignition internal combustion engine according to claim 2, **characterized in that** a fuel delivery pump (7), a high-pressure pump (11) and an electronic controller (17) are provided.

5. The compression-ignition internal combustion engine according to claim 4, **characterized in that**, upstream of the fuel delivery pump (7), a junction (6) is provided of a line from the tank (2) for the fuel having the low ignition point and a line from the tank (1) for the fuel having the higher ignition point.

6. The compression-ignition internal combustion engine according to claim 5, **characterized in that** a fuel pump (3) is provided between the tank (2) for the fuel having the low ignition point and the junction (6)

7. The compression-ignition internal combustion engine according to claim 6, **characterized in that** a first throttle (4) is provided between the fuel pump (3) and the junction (6).

8. The compression-ignition internal combustion engine according to claim 4, **characterized in that** a fuel filter (9) is provided between the fuel delivery pump (7) and the high-pressure pump (11).

9. The compression-ignition internal combustion engine according to claim 8, **characterized in that** a pressure-relief valve (10) with a recirculation (15), which ends upstream of the fuel delivery pump (7), is provided between the fuel filter (9) and the high-pressure pump (11).

10. The compression-ignition internal combustion engine according to claim 9, **characterized in that**, upstream of the high-pressure pump (11), a return line (16) branches off into the tank (1) for the fuel having the higher ignition point.

11. The compression-ignition internal combustion engine according to claim 10, **characterized in that** an additional throttle (14) is provided in the return line (16).

12. The compression-ignition internal combustion engine according to claim 11, **characterized in that**, in the return line (16), a closure means (13) is provided, which is connected with the electronic controller (17).

13. The compression-ignition internal combustion engine according to claim 12, **characterized in that** the closure means (13) is closed when the injection system (12) is provided with fuel having the low ignition point.

14. The compression-ignition internal combustion engine according to claim 1, **characterized in that** a magnetic valve (5) is provided between the tank (2) for the fuel having the low ignition point and the junction (6).

15. The compression-ignition internal combustion engine according to claim 3, **characterized in that** the injection system (12) is configured according to the common-rail principle.

## Revendications

1. Moteur à combustion interne de type moteur Diesel, qui peut fonctionner avec un carburant ayant un point d'inflammation bas et avec un carburant ayant un point d'inflammation plus élevé, avec un réservoir (2) pour le carburant ayant un point d'inflammation bas, avec un réservoir (1) pour le carburant ayant un point d'inflammation plus élevé et avec un dispositif d'injection (12), **caractérisé en ce que** l'amenée du carburant ayant un point d'inflammation bas est réglée de manière telle que le dispositif d'injection (12) est chargé en marche à vide exclusivement avec le carburant ayant un point d'inflammation bas, **en ce que** dans la zone de charge inférieure, la quantité de carburant ayant un point d'inflammation bas reste inchangée lors d'un débit de marche à vide et **en ce que** dans la zone de charge plus élevée aucun carburant ayant un point d'inflammation bas n'est amené.

2. Moteur à combustion interne de type moteur Diesel selon la revendication 1, **caractérisé en ce que** le débit de marche à vide est maintenu égal dans une zone de tolérance de +/- 20 %.

3. Moteur à combustion interne de type moteur Diesel selon la revendication 2, **caractérisé en ce qu'**un filtre à particules est prévu et pour une phase de combustion le débit de marche à vide est augmenté de 100 % au moins.

4. Moteur à combustion interne de type moteur Diesel selon la revendication 2, **caractérisé en ce qu'**une pompe d'alimentation en carburant (7), une pompe haute pression (11) et une commande électronique (17) sont prévues.

5. Moteur à combustion interne de type moteur Diesel selon la revendication 4, **caractérisé en ce que** devant la pompe d'alimentation en carburant (7) est prévue une jonction (6) d'une conduite du réservoir (2) pour le carburant ayant le point d'inflammation bas et d'une conduite du réservoir (1) pour le carburant ayant le point d'inflammation plus élevé.

6. Moteur à combustion interne de type moteur Diesel selon la revendication 5, **caractérisé en ce que** entre le réservoir (2) pour le carburant ayant le point d'inflammation bas et la jonction (6) est prévue une pompe de carburant (3).

7. Moteur à combustion interne de type moteur Diesel selon la revendication 6, **caractérisé en ce que** entre la pompe de carburant (3) et la jonction (6) est prévu un premier dispositif d'étranglement (4).

8. Moteur à combustion interne de type moteur Diesel selon la revendication 4, **caractérisé en ce que** entre la pompe d'alimentation en carburant (7) et la pompe haute pression (11) est prévu un filtre à carburant (9).

9. Moteur à combustion interne de type moteur Diesel selon la revendication 8, **caractérisé en ce que** entre le filtre à carburant (9) et la pompe haute pression (11) est prévue une soupape de surpression (10) avec un circuit d'asservissement (15), qui se termine avant la pompe d'alimentation en carburant (7).

10. Moteur à combustion interne de type moteur Diesel selon la revendication 9, **caractérisé en ce qu'**une conduite de retour (16) dérive avant la pompe haute pression (11) dans le réservoir (1) pour le carburant ayant le point d'inflammation plus élevé.

11. Moteur à combustion interne de type moteur Diesel selon la revendication 10, **caractérisé en ce que** dans la conduite de retour (16) est prévue un dispositif d'étrangement supplémentaire (14).

12. Moteur à combustion interne de type moteur Diesel selon la revendication 11, **caractérisé en ce que** dans la conduite de retour (16) est prévu un dispositif obturateur (13), qui est en relation avec la commande électronique (17).

13. Moteur à combustion interne de type moteur Diesel selon la revendication 12, **caractérisé en ce que** le dispositif obturateur (13) est fermé, lorsque du carburant ayant un point d'inflammation bas est amené au dispositif d'injection (12).

14. Moteur à combustion interne de type moteur Diesel selon la revendication 1, **caractérisé en ce que** entre le réservoir (2) pour le carburant ayant le point d'inflammation bas et la jonction (6) est prévue une vanne magnétique (5).

15. Moteur à combustion interne de type moteur Diesel selon la revendication 3, **caractérisé en ce que** le dispositif d'injection (12) est construit selon la technique Common-Rail.
